# EUROPEAN PATENT SPECIFICATION

(11) **EP 0 780 212 B1**
(45) Date of publication and mention of the grant of the patent: **03.03.1999**
(21) Application number: 96118798.6
(22) Date of filing: 24.11.1996
(51) Int. Cl.: B29C 65/18, B31B 1/90

(54) **Device for fixing a tear-off strip to a web of wrapping material**
Vorrichtung zum Verbinden eines Aufreissstreifens mit einer Materialbahn
Dispositif pour fixer une bandelette d'arrachage à une matière en bande

(30) Priority: 21.12.1995 IT BO950595
(43) Date of publication of application: 25.06.1997
(73) Proprietor: G.D. S.p.A., 40133 Bologna (IT)
(72) Inventor: Minarelli, Alessandro, 40053 Bazzano (IT); Cacciari, Valerio, 40050 Funo di Argelato (IT)
(74) Representative: Giambrocono, Alfonso, Dr. Ing.

(56) References cited:
- EP-A- 0 248 225
- EP-A- 0 569 807
- DE-A- 3 821 266
- US-A- 2 552 259

## Description

This invention relates to a device for fixing a tear-off strip to a web of wrapping material.

The invention finds particularly advantageous application in the field of cigarette packaging machines, and in particular cellophaning machines, to which the description will make explicit reference, but without losing its generality on this account.

In cellophaning machines, for fixing a tear-off strip of synthetic material to a web of wrapping material also of synthetic material, it is known to use a device comprising a first and a second line for feeding the web of wrapping material and the tear-off strip respectively; a deviation roller common to the two feed lines and having an outer surface arranged to receive the web of wrapping material and the tear-off strip in positions superimposed one on the other and in mutual contact; and heater means for heating the deviation roller so as to weld the web of wrapping material and the tear-off strip together at the moment of their superimposition along the outer surface of the deviation roller.

To weld a web and a tear-off strip together continuously, it is known to use heated rollers which, however, have the drawback of heating the web over large areas not involved in the welding of the tear-off strip. The web heating results in a variation in its physical characteristics, such as its resistance to tearing, with consequent problems relative to the driving of the web. The probability of such a problem arising is greater the thinner the web of wrapping material.

EP-A-0569807 discloses a device for fixing a tear-off strip to a web by heating applied as they are held in contact with each other, over the surface of a deviation roller. The outer surface of the roller is divided into three adjacent annular bands. One of said bands is located between the other bands. The heater means are located in proximity to the first band, the latter being a continuous annular band positioned, when in use, in proximity to said tear-off strip. The outer ring-shaped part of the first band is made of a material with higher coefficient of thermal conductivity.

The object of the present invention is to provide a device for fixing a tear-off strip to a web of wrapping material, which is free from the aforesaid drawbacks, and which in particular is of simple and economical construction.

This object is attained by a device according to enclosed claim 1.

Other features of the invention are disclosed in the dependent claims.

The present invention is described hereinafter with reference to the accompanying drawings, which illustrate one non-limiting embodiment thereof, in which:
Figure 1 is a schematic side elevation of a preferred embodiment of the fixing device according to the present invention;
Figure 2 is a section on the line II-II of Figure 1; and
Figure 3 is a section through a modification of a part of Figure 2.

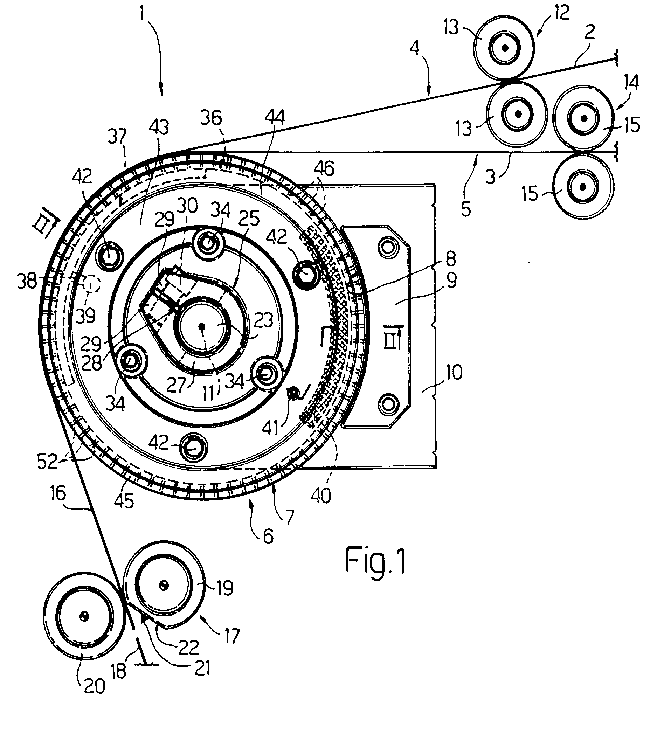

In Figure 1, the reference numeral 1 indicates overall a device for joining a web 2 of wrapping material and a tear-off strip 3 together by welding.

The device 1 comprises a line 4 for feeding the web 2 and a line 5 for feeding the tape 3 to a common deviation roller 6, the outer cylindrical surface 7 of which is arranged to receive, along an arc of contact of about 120° in width, the tape 3 and the web 2 superimposed one on the other and in mutual contact, the tape 3 being interposed between the surface 7 and a corresponding part of the web 2. A band of the surface 7, disposed in a position diametrically opposite said arc of contact, faces the emitting surface 8 of a heater element 9 supported in a fixed position by a frame defined by a plate 10 transverse to the axis 11 of rotation of the roller 6.

The roller 6 is a motorized welding roller, arranged to receive the web 2 from a respective guide device forming part of the line 4 and defined by two rollers 13 positioned in mutual contact, and the tape 3 from a respective guide device 14 forming part of the line 5 and defined by two rollers 15 positioned in mutual contact, to weld the web 2 and the tape 3 together to form a composite web 16, and to feed the web 16 to a cutting unit 17 for cutting the web 16 into a succession of wrapping sheets 18. The cutting unit 17 comprises, in known manner, two rollers 19 and 20, the first of which is a substantially cylindrical roller provided with a blade 21 extending radially outwards from a flat facet 22 of the roller 19, and the second of which is a cylindrical roller acting as a counter-blade.

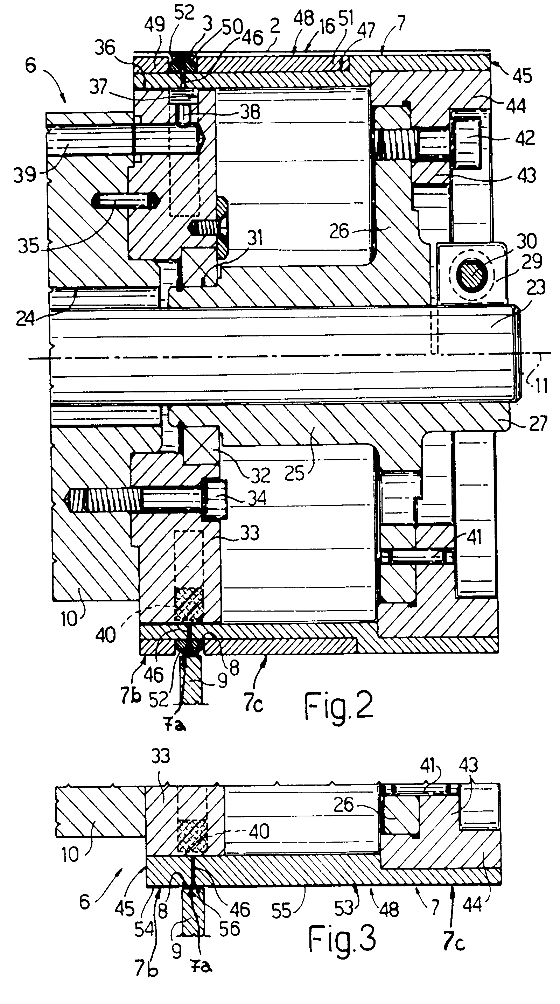

As better illustrated in Figure 2, the roller 6 is keyed onto a motorized shaft 23 coaxial to the axis 11 and extending rotatably through a hole 24 provided through the plate 10 to cause the roller 6 to rotate about the axis 11 in an anticlockwise direction with respect to Figure 1.

The roller 6 comprises an internal sleeve 25, which is mounted on that part of the shaft 23 projecting from the plate 10 and comprises a flange 26 extending radially outwards from that end of the sleeve 25 distant from that facing the plate 10. At that end carrying the flange 26, the sleeve 25 comprises a tubular appendix 27 provided with an axial slot 28, from the opposite edges of which there project radially outwards two flexible radial appendices 29, which are tightened one against the other by a screw 30 to lock the appendix 27 and hence the sleeve 25 on the shaft 23.

At that end facing the plate 10, the sleeve 25 has a depressed annular surface 31, on which there is mounted the inner race (not shown) of a bearing 32, the outer race (not shown) of which is axially locked to the interior of a seat provided in the inner cylindrical surface of a fixed pneumatic distributor 33 of annular shape coaxial to the axis 11 and fixed to that surface of the plate 10 facing the roller 6 by axial screws 34 and centering pins 35. The distributor 33 is bounded externally by a cylindrical surface 36 provided with a groove 37, which, as shown in Figure 1, extends through at least the entire said arc of contact between the web 16 and the surface 7 of the roller 6 and communicates, via a radial conduit 38, with a suction conduit 39 provided through the distributor 33 and the plate 10 and communicating with the inlet of a known vacuum pump, not shown.

On the side diametrically opposite that carrying the groove 37, the distributor 33 comprises a peripheral chamber containing a resistor 40, which could also be dispensed with, facing the emitting surface 8 of the heater element 9.

Again as shown in Figure 2, to the outer periphery of the flange 26 there is rigidly connected, by centering pins 41 and screws 42, an internal annular flange 43 of a ring 44 forced into a tubular body 45, which extends from the ring 44 towards the plate 10 and is rotatably coupled in a fluid-tight manner to the surface 36, to define together with the groove 37 a suction chamber communicating with the outside via a ring of radial holes 46 provided through the body 45.

The body 45 is preferably constructed of a metal of high coefficient of thermal conductivity and, as shown in Figure 2, has an outer cylindrical surface consisting of a first portion, positioned on that end of the body 45 distant from that facing the plate 10 and coinciding with the surface 7, and a depressed second portion 47 provided with a tubular covering 48, the inner surface of which is in contact with depressed portion 47, and the outer surface of which coincides with the surface 7.

The covering 48 comprises three cylindrical rings 49, 50 and 51 arranged coaxially in mutual contact, the ring 50 being in an intermediate position between the other two and formed of a material of high coefficient of thermal conductivity, to define a continuous intermediate high thermal conductivity portion 7a of the surface 7.

The rings 49 and 51, positioned on opposite sides of the ring 50 so that two lateral portions 7b and 7c of the surface 7 are defined, are formed of a material of low thermal conductivity. Specifically, the two rings 49 and 51 represent two spacers, which are locked both axially and circumferentially on the body 45 by radial grub screws, not shown, to lock the ring 50 directly to the exterior of the groove 37. The ring 50 comprises a ring of through radial holes 52 distributed about the ring 50 with the same pitch as the holes 46, and is fixed angularly on the body by a radial grub screw, not shown, such that each hole 52 communicates with the corresponding hole 46.

If the transverse position of the tape 3 on the web 2 has to be changed, the rings 49 and 51 are replaced by analogous rings of different length, and at the same time the distributor 33 is replaced by a new distributor in which the groove is located in the new position of the tape 3.

According to a modification, not shown, the body 45 is without the depressed portion 47 and the ring 51 extends along the entire outer surface of the body 45 left free by the rings 49 and 50.

In use, during the rotation of the roller 6, the ring 50, in moving in front of the surface 8 of the heater element 9, receives a determined quantity of thermal energy and attains a temperature such as to cause the tape 3 to adhere, in correspondence with said arc of contact, to the web 2 of wrapping material to form the composite web 16. If present, the resistor 40 can also contribute to the heating of the ring 50. In any event, the heat emitted by the heater element 9 and the heat emitted by the resistor 40 combine to heat the body 45, which acts as a thermal flywheel and helps to maintain the entire ring 50 at a substantially constant temperature. Although the two rings 49 and 51, because of their low thermal conductivity, reduce to a minimum the quantity of heat radiated outwards from those regions of the body 45 not covered by the ring 50, they enable the temperature to vary relatively "smoothly" along the surface 7 starting from that portion 7a of the surface 7 defined by the ring 50, so as to prevent any curling of the web 2.

In the modification shown in Figure 3, the body 45 has a cylindrical outer surface 53, the rings 49, 50 and 51 are dispensed with, and the covering 48 is formed by two tubular segments 54 and 55 of relatively thin ceramic material, which are preferably obtained by depositing the ceramic material onto the surface 53 to define between the segments 54 and 55 an uncovered segment 56, into which the holes 46 open.

In the case of the modification of Figure 3, the intermediate continuous band 7a of high coefficient of thermal conductivity of the surface 7 of the roller 6 is defined by the segment 56, which constitutes part of the outer surface of the body 45, whereas the bands 7b and 7c of low coefficient of thermal conductivity of the surface 7 are defined by the two segments 54 and 55 which prevent part of the heat of the body 45 from propagating outwards.

By suitable choice of the coefficients of thermal conductivity, the illustrated embodiments enable a concentration of heat transmission to be obtained in that region of the deviation roller 6 in contact with the tear-off strip 3, while at the same time achieving a low thermal gradient between the heated region and the cold region of the roller so as not to generate curling of the web of wrapping material, a problem which arises more frequently the thinner the web.

## Claims

1. A device for fixing a tear-off strip (3) to a web (2) of wrapping material, the device (1) comprising a first line (4) and a second line (5) for feeding the web (2) of wrapping material and the tear-off strip (3) respectively; a deviation roller (6) common to the two feed lines (4,5) and having a continuous outer surface (7) arranged to receive the web (2) of wrapping material and the tear-off strip (3) in positions superimposed one on the other and in mutual contact, the outer surface (7) of the roller (6) being divided into at least three adjacent bands (7a, 7b, 7c), a first (7a) of said bands (7a,7b,7c) being located between the other bands (7b,7c), the first band (7a) being a continuous annular band positioned, when in use, in proximity to said tear-off strip (3) and having a coefficient of thermal conductivity higher than the coefficients of thermal conductivity of the other bands (7b, 7c); heater means (9; 40) for heating the deviation roller (6) so as to weld the web (2) of wrapping material and the tear-off strip (3) together during the course of their superimposition along the outer surface (7) of the deviation roller (6), the heater means being located in proximity to the first band (7a); characterised in that the deviation roller (6) comprises a continuous tubular body (45) of thermally conducting material having an outer covering (48) defining said other bands (7b, 7c) and bounding said first continuous annular band (7a).

2. A device as claimed in claim 1, characterized in that retention means (33, 46, 52; 33, 46) are provided in correspondence with said first continuous annular band (7a) to control the tear-off strip (3) in position on said outer surface (7).

3. A device as claimed in claim 2, characterised in that said retention means (33, 46, 52; 33, 46) comprise a ring of holes (52; 46) provided through said first continuous annular band (7a) and suction means (33) communicating with said holes (52; 46).

4. A device as claimed in one of claims 1, 2 and 3, characterised in that said covering (48) comprises three cylindrical rings (49, 50, 51) positioned axially in mutual contact, and of which a first ring (50) is arranged in a position intermediate to the other two, is formed of a material of high coefficent of thermal conductivity, and defines said first continuous annular band (7a); the other two rings (49, 51) being arranged on opposite sides of the first ring (50) and being formed of a material of low coefficient of thermal conductivity.

5. A device as claimed in claims 3 and 4, characterised in that said holes are proided through said first ring (50).

6. A device as claimed in any one of claims 1 to 3, characterised in that said covering (48) comprises two tubular segments (54, 55) of relatively thin ceramic material, which define between them an uncovered segment (56) defining said first continuous annular band (7a).

7. A device as claimed in claims 3 and 6, characterised in that said holes (46) open in correspondence with said uncovered segment (56).

8. A device as claimed in claim 6 or 7, characterised in that the said two tubular segments (54, 55) of ceramic material are obtained by depositing ceramic material onto said tubular body (45).

9. A device as claimed in one of claims 1 to 8, characterised in that said heater means (9; 40) comprise a heating element (9) located external to said tubular body (45).

10. A device as claimed in one of claims 1 to 8, characterised in that said heater means (9; 40) comprise a heating element (40) located internal to said tubular body (45).

## Patentansprüche

1. Vorrichtung zum Befestigen eines Ausreißstreifens (3) an einer Bahn (2) aus Verpackungsmaterial, wobei die Vorrichtung (1) eine erste Linie (4) und eine zweite Linie (5) zum Fördern der Bahn (2) aus Verpackungsmaterial bzw. des Ausreißstreifens (3); eine Umlenkrolle (6), die mit den beiden Förderlinie (4, 5) in Beziehung steht und eine fortlaufende Außenfläche (7) hat, die dazu ausgestaltet ist, die Bahn (2) aus Verpackungsmaterial und den Ausreißstreifen (3) in Positionen entgegenzunehmen, die übereinanderliegend angeordnet sind und in gegenseitigem Kontakt stehen, wobei die Außenfläche (7) der Rolle (6) in zumindest drei benachbarte Streifen (7a, 7b, 7c) unterteilt ist, wobei ein erster (7a) der Streifen (7a, 7b, 7c) zwischen den anderen Streifen (7b, 7c) angeordnet ist, wobei der erste Streifen (7a) ein fortlaufender ringförmiger Streifen ist, der bei Verwendung in der Nähe zum Ausreißstreifen (3) angeordnet ist und einen Wärmeleitfähigkeitskoeffizienten hat, der größer ist als die Wärmeleitfähigkeitskoeffizienten der anderen Streifen (7b, 7c); und Heizeinrichtungen (9; 40) zum Erhitzen der Umlenkrolle (6) enthält, um die Bahn (2) aus Verpackungsmaterial und den Ausreißstreifen (3) während des Verlaufes ihrer übereinanderliegenden Anordnung entlang der Außenfläche (7) der Umlenkrolle (6) miteinander zu verschweissen, wobei die Heizeinrichtungen in der Nähe zum ersten Streifen (7a) angeordnet sind, dadurch gekennzeichnet, daß die Umlenkrolle (6) einen fortlaufenden rohrförmigen Körper (45) mit einem thermisch leitfähigen Material aufweist, der eine Außenabdeckung (48) hat, durch die die äußeren Streifen (7b, 7c) gebildet und der erste fortlaufende ringförmige Streifen (7a) begrenzt ist.

2. Vorrichtung nach Anspruch 1, dadurch gekennzeichnet, daß Halteeinrichtungen (33, 46, 52; 33, 46) zusammen mit dem ersten fortlaufenden ringförmigen Streifen (7a) vorgesehen sind, um den Ausreißstreifen (3) in einer Position an der Außenfläche (7) zu steuern.

3. Vorrichtung nach Anspruch 2, dadurch gekennzeichnet, daß die Halteeinrichtungen (33, 46, 52; 33, 46) einen Ring mit Löchern (52; 46), die durch den ersten fortlaufenden ringförmigen Streifen (7a) vorgesehen sind, und eine Saugeinrichtung (33) umfassen, die mit den Löchern (52; 46) in Verbindung steht.

4. Vorrichtung nach einem der Ansprüche 1, 2 und 3, dadurch gekennzeichnet, daß die Abdeckung (48) drei zylindrische Ringe (49, 50, 51) enthält, die axial in gegenseitigem Kontakt angeordnet sind und von denen ein erster Ring (50), der in einer Position zwischen den beiden anderen angeordnet ist, aus einem Material mit einem hohen Wärmeleitfähigkeitskoeffizienten gebildet ist und den ersten fortlaufenden ringförmigen Streifen (7a) bildet, wobei die anderen beiden Ringe (49, 51) an gegenüberliegenden Seiten des ersten Ringes (50) angeordnet und aus einem Material mit einem geringen Wärmeleitfähigkeitskoeffizienten hergestellt sind.

5. Vorrichtung nach Anspruch 3 und 4, dadurch gekennzeichnet, daß die Löcher durch den ersten Ring (50) vorgesehen sind.

6. Vorrichtung nach einem der Ansprüche 1 bis 3, dadurch gekennzeichnet, daß die Abdeckung (48) zwei ringförmige Segmente (54, 55) aus relativ dünnem keramischen Material aufweist, die zwischen sich ein unbedecktes Segment (56) bilden, durch das der erste fortlaufende ringförmige Streifen (7a) gebildet ist.

7. Vorrichtung nach Anspruch 3 und 6, dadurch gekennzeichnet, daß die Löcher (46) in Übereinstimmung mit dem unbedeckten Segment (56) geöffnet sind.

8. Vorrichtung nach Anspruch 6 oder 7, dadurch gekennzeichnet, daß die beiden ringförmigen Segmente (54, 55) aus keramischem Material durch Ablagerung von keramischem Material auf dem rohrförmigen Körper (45) gebildet sind.

9. Vorrichtung nach einem der Ansprüche 1 bis 8, dadurch gekennzeichnet, daß die Heizeinrichtungen (9; 40) ein Heizelement (9) umfassen, das außerhalb des rohrförmigen Körpers (45) angeordnet ist.

10. Vorrichtung nach einem der Ansprüche 1 bis 8, dadurch gekennzeichnet, daß die Heizeinrichtungen (9; 40) ein Heizelement (40) umfassen, das innerhalb des rohrförmigen Körpers (45) angeordnet ist.

## Revendications

1. Dispositif de fixation d'une bandelette d'arrachage (3) à une bande (2) de matière d'emballage, le dispositif (1) comprenant une première ligne (4) et une seconde ligne (5) assurant l'alimentation de la bande (2) de matière d'emballage et de la bandelette d'arrachage (3) respectivement ; un tambour de déviation (6) commun aux deux lignes d'alimentation (4, 5) et présentant une surface externe continue (7) agencée pour recevoir la bande (2) de matière d'emballage et la bandelette d'arrachage (3) dans une position superposée et en contact mutuel, la surface externe (7) du rouleau (6) étant divisée en trois anneaux adjacents (7a, 7b, 7c) au moins, un premier anneau (7a) desdits anneaux (7a, 7b, 7c) étant situé entre les autres anneaux (7b, 7c), le premier anneau (7a) étant un anneau circulaire continu positionné, en fonctionnement, à proximité de ladite bandelette d'arrachage (3) et présentant un coefficient de conductivité thermique supérieur aux coefficients de conductivité thermique des autres anneaux (7b, 7c) ; des moyens de chauffage (9 ; 40) pour chauffer le tambour de déviation (6) de manière à souder la bande (2) de matière d'emballage à la bandelette d'arrachage (3) lors de leur superposition le long de la surface externe (7) du tambour de déviation (6), les moyens de chauffage étant placés à proximité du premier anneau (7a) ; caractérisé en ce que le tambour de déviation (6) comprend un corps tubulaire continu (45) en matériau thermoconducteur ayant une enveloppe externe (48) définissant lesdits autres anneaux (7b, 7c) et délimitant ledit premier anneau circulaire continu (7a).

2. Dispositif selon la revendication 1, caractérisé en ce qu'il comporte des moyens de retenue (33, 46, 52 ; 33, 46) au niveau dudit anneau circulaire continu (7a) afin de maintenir en position la bandelette d'arrachage (3) sur ladite surface externe (7).

3. Dispositif selon la revendication 2, caractérisé en ce que lesdits moyens de retenue (33, 46, 52 ; 33, 46) comprennent un anneau de trous (52 ; 46) ménagés dans ledit premier anneau circulaire continu (7a) et un moyen d'aspiration (33) communiquant avec lesdits trous (52 ; 46).

4. Dispositif selon l'une des revendications 1, 2 et 3, caractérisé en ce que ladite enveloppe (48) comprend trois bagues cylindriques (49, 50, 51) positionnées axialement en contact les unes avec les autres, une première bague (50) réalisée en un matériau à coefficient de conductivité thermique élevé étant agencée dans une position intermédiaire par rapport aux deux autres et définissant ledit premier anneau circulaire continu (7a) ; les deux autres bagues (49, 51) étant agencées de chaque côté de la première bague (50) et réalisées en un matériau à faible coefficient de conductivité thermique.

5. Dispositif selon les revendications 3 et 4, caractérisé en ce que lesdits trous sont ménagés à travers ladite première bague (50).

6. Dispositif selon l'une quelconque des revendications 1 à 3, caractérisé en ce que ladite enveloppe (48) comprend deux segments tubulaires (54, 55) réalisés dans une matière céramique relativement fine, qui définissent entre eux un segment découvert (56) définissant lui-même ledit anneau circulaire continu (7a).

7. Dispositif selon les revendications 3 et 6, caractérisé en ce que lesdits trous (46) débouchent au niveau dudit segment découvert (56).

8. Dispositif selon les revendications 6 ou 7, caractérisé en ce que lesdits deux segments tubulaires (54, 55) en matière céramique sont obtenus par dépôt de matière céramique sur ledit corps tubulaire (45).

9. Dispositif selon l'une des revendications 1 à 8, caractérisé en ce que lesdits moyens de chauffage (9 ; 40) comprennent un élément de chauffage (9) situé à l'extérieur dudit corps tubulaire (45).

10. Dispositif selon l'une des revendications 1 à 8, caractérisé en ce que lesdits moyens de chauffage (9 ; 40) comprennent un élément de chauffage (40) situé à l'intérieur dudit corps tubulaire (45).
